# EUROPEAN PATENT APPLICATION

(11) **EP 4 066 992 A1**
(43) Date of publication of application: **05.10.2022**
(21) Application number: 22158506.0
(22) Date of filing: 24.02.2022
(51) Int. Cl.: B23Q 11/08

(54) **ROTATION INDEXING DEVICE**

(30) Priority: 30.03.2021 JP 2021056962
(71) Applicant: Tsudakoma Kogyo Kabushiki Kaisha, Kanazawa-shi, Ishikawa-ken 921-8650 (JP)
(72) Inventor: ISHIZAKI, Junichiro, Kanazawa-shi, 921-8650 (JP)
(74) Representative: Zimmermann & Partner Patentanwälte mbB

(57) **Abstract**

A rotation indexing device (1) includes a rotary body (20) having a main shaft (21) rotatably supported via a bearing (2) in an accommodating hole (11) of a frame (10) and a table part (22) provided on one end-side of the main shaft (21), a workpiece or a jig for attaching the workpiece being attached to the table part (22); an oil seal (51) provided in a void portion (50), which is a portion on the one end-side relative to the bearing (2), in a space between the frame (10) and the rotary body (20); a drive mechanism (30) configured to rotationally drive the rotary body (20); and a holding mechanism (40) for holding the rotary body (20) at an indexed angular position during indexing processing. A dust seal (52) is provided in the void portion (50) on an opposite side to the bearing (2)-side with respect to the oil seal (51).

## Description

### TECHNICAL FIELD

The present invention relates to a rotation indexing device including a rotary body having a main shaft rotatably supported via a bearing in an accommodating hole of a frame and a table part provided on one end-side of the main shaft, a workpiece or a jig for attaching the workpiece being attached to the table part; an oil seal provided in a void portion, which is a portion on the one end-side relative to the bearing, in a space between the frame and the rotary body; a drive mechanism configured to rotationally drive the rotary body; and a holding mechanism for holding the rotary body at an indexed angular position during indexing processing.

### BACKGROUND ART

For example, PTL 1 discloses a rotation indexing device that is used for a working machine. The rotation indexing device includes a rotary shaft (main shaft) rotatably supported via a bearing in an accommodating hole of a frame, and a processing table (table part) as a face plate attached to one end-side of the main shaft, a workpiece being attached to the processing table. The rotation indexing device is configured to index an angular position of a rotary body having the table part and the main shaft by rotationally driving the rotary body by a drive mechanism. In addition, the rotation indexing device includes a clamp device (holding mechanism) configured to hold (clamp) the rotary body at the indexed angular position so that processing (indexing processing) can be performed at the indexed angular position.

Note that, the drive mechanism configured to rotationally drive the rotary body includes a gear mechanism such as a worm and a worm wheel arranged inside the frame. Therefore, in the rotation indexing device, lubricating oil for lubricating the gear mechanism is stored in at least a part inside the frame, at which the gear mechanism is arranged. Further, the rotation indexing device of PTL 1 is provided with an oil seal so as to prevent the lubricating oil stored in this way from flowing out to an outside. However, the position where the oil seal is provided is a portion (a void portion referred to in the present invention) on the one end-side of the main shaft relative to the bearing, in a space between the frame and the main shaft. PTL 2 also discloses a similar rotation indexing device.

### CITATION LIST

### PATENT LITERATURE

PTL 1: JP2009-184021A
PTL 2: JP2011-104725A

In such a rotation indexing device, there may occur a problem that the oil seal is damaged by dust such as chips introduced into the void portion and sealing performance of the oil seal is deteriorated. Specifically, the oil seal provided in the rotation indexing device is provided to prevent the lubricating oil stored inside the frame from flowing out to the outside, as described above. A general oil seal has a seal lip portion (main lip portion), and the main lip portion is pressed against the rotary body to seal a space (in the case of the rotation indexing device, a space where lubricating oil is stored).

However, in the case of the rotation indexing device, the main lip portion of the oil seal may be damaged due to dust such as chips introduced into the void portion. When the main lip portion is damaged, as a result, there occurs a problem that the sealing performance of the oil seal is deteriorated.

Note that, as is the case with the oil seal disclosed in PTL 1, the oil seal may be configured to have a dust lip portion (sub-lip portion) for preventing dust from entering from the outside, in addition to the main lip portion as described above. However, in a general oil seal, the sub-lip portion is only an auxiliary one, and is configured to prevent introduction of only slight dust (for example, foreign matter such as chips or coolant liquid).

For this reason, even when the oil seal has a sub-lip portion, it is not possible to completely prevent introduction of dust from the outside only by the sub-lip portion. Therefore, even when the oil seal has the sub-lip portion, the dust that cannot be prevented from entering with the sub-lip portion damages the main lip portion, as is the case with the rotation indexing device provided with the oil seal having only the main lip portion described above, so that the performance of the oil seal is deteriorated.

In addition, the rotation indexing device disclosed in PTL 2 is configured to include two oil seals each having such a sub-lip portion. However, as described above, the sub-lip portion is an auxiliary one that can prevent introduction of only the slight dust, and the main lip portion is mainly intended to prevent the lubricating oil from flowing out to the outside (that is, vulnerable to introduction of the dust from the outside). Therefore, even when two such oil seals are provided, the main lip portion of each oil seal is damaged by the dust, similar to the case of the rotation indexing device provided with one oil seal having a sub-lip portion.

Note that, if the oil seal (main lip portion) is damaged and its sealing performance is thus deteriorated, the lubricating oil stored inside the frame may flow out and an amount of the lubricating oil may decrease or the coolant liquid may infiltrate into an inside and a concentration of the lubricating oil may decrease. In any case, there is concern that the gear mechanism is subjected to a state where it cannot be appropriately lubricated.

### SUMMARY

The present invention has been made in view of the above situations, and an object thereof is to provide a rotation indexing device having an oil seal provided in a void portion with a configuration capable of preventing damage of an oil seal due to dust from an outside.

A preamble of the present invention is a rotation indexing device including a rotary body having a main shaft rotatably supported via a bearing in an accommodating hole of a frame and a table part provided on one end-side of the main shaft, a workpiece or a jig for attaching the workpiece being attached to the table part; an oil seal provided in a void portion, which is a portion on the one end-side relative to the bearing, in a space between the frame and the rotary body; a drive mechanism configured to rotationally drive the rotary body; and a holding mechanism for holding the rotary body at an indexed angular position during indexing processing. In addition, the present invention is characterized in that a dust seal is provided in the void portion on an opposite side to the bearing-side with respect to the oil seal.

According to the rotation indexing device of the present invention, the dust seal is provided in the portion of the void portion on the opposite side to the bearing-side. That is, the rotation indexing device is configured so that the dust seal is provided on a further side where dust is introduced than a position where the oil seal is provided. Note that, the dust seal is mainly intended to prevent introduction of dust, and is configured to have high sealing performance against the introduction of dust from the outside. Therefore, according to the rotation indexing device configured as described above, even if the dust is introduced into the void portion from the outside, the dust seal prevents the dust from being introduced into the oil seal-side. As a result, it is possible to prevent the oil seal from being damaged due to the dust as much as possible. Thereby, it is possible to prevent the sealing performance of the oil seal from being deteriorated.

### BRIEF DESCRIPTION OF DRAWINGS

FIG. 1 is a cross-sectional view showing one embodiment of a rotation indexing device according to the present invention.
FIG. 2 is an enlarged cross-sectional view of a main part of the rotation indexing device shown in FIG. 1.

### DESCRIPTION OF EMBODIMENTS

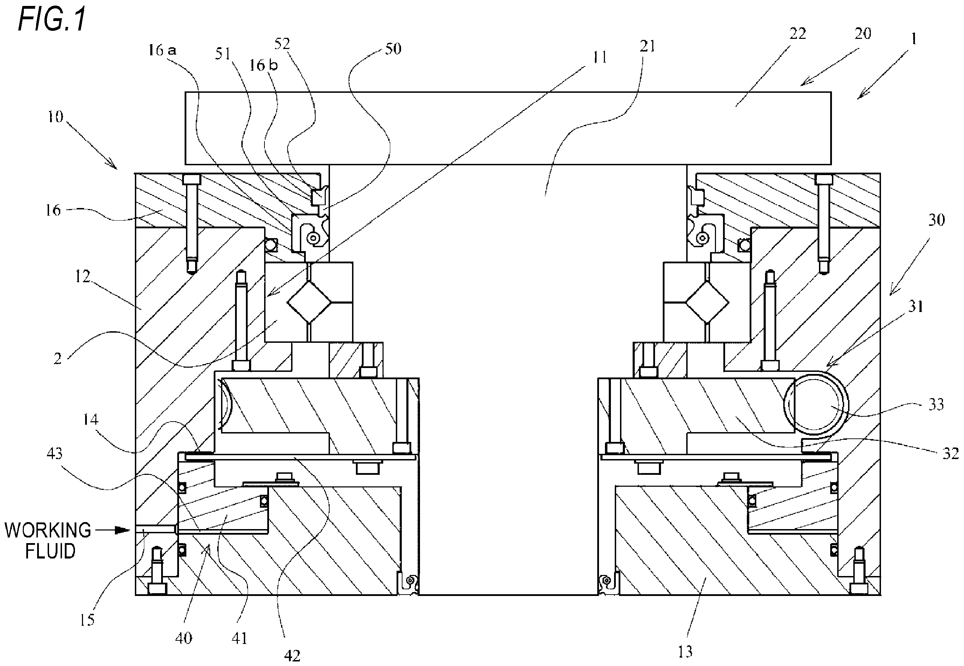

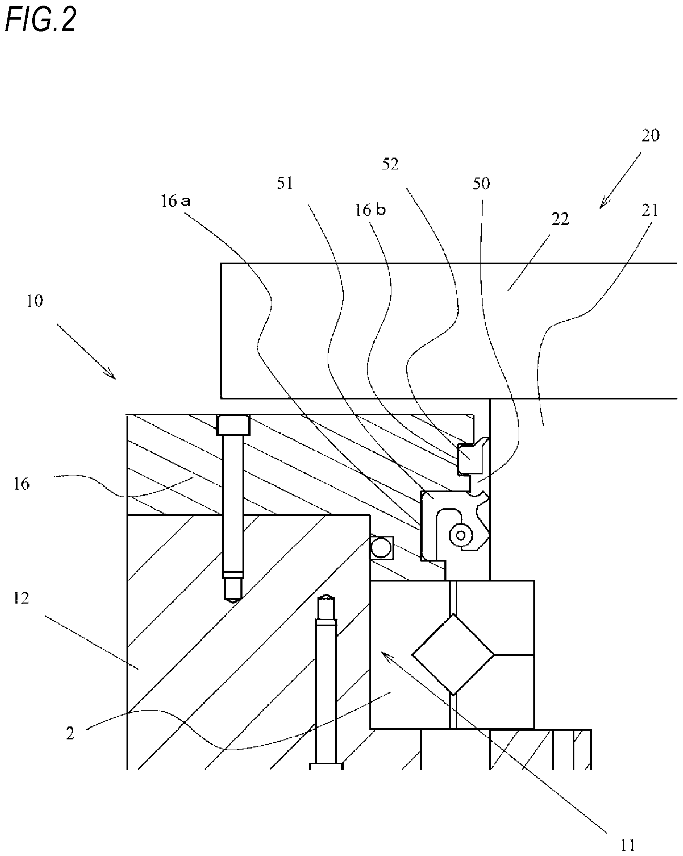

Hereinafter, one embodiment of a rotation indexing device of the present invention will be described with reference to FIGS. 1 and 2.

A rotation indexing device 1 includes, as its constitutional elements, a frame 10 mounted on a working machine or the like, a main shaft 21 rotatably supported via a bearing 2 in an accommodating hole 11 of the frame 10, and a processing table (table part 22) which is attached on one end-side of the main shaft 21 and to which a workpiece or a jig for attaching the workpiece is attached. The rotation indexing device 1 also includes a drive mechanism 30 configured to rotationally drive and index a rotary body 20 having the main shaft 21 and the table part 22 to a set angular position, and a holding mechanism 40 for clamping (holding) the rotary body 30 at the indexed angular position.

The frame 10 has, as a main body, a main body part 12 that occupies most of the frame 10. The frame 10 includes a base part 13 attached to the main body part 12. Specifically, the main body part 12 has a through-hole having an inner diameter through which the main shaft 21 can be inserted. However, the through-hole is formed so that an inner diameter on one end-side thereof is smaller than an inner diameter on the other end-side. That is, the through-hole is configured to have a small diameter portion having a small inner diameter on one end-side and a large diameter portion having a large inner diameter on the other end-side.

In addition, the base part 13 has a disk shape, and is formed to have such a size that can be fitted on its outer peripheral surface to the large diameter portion of the through-hole of the main body part 12. Further, the base part 13 has a through-hole formed to penetrate in a thickness direction thereof, and having an inner diameter through which the main shaft 21 can be inserted. However, the through-hole of the base part 13 is formed so that a center thereof is located in the middle of the base part 13, as seen in the thickness direction thereof. Further, the base part 13 is attached to the main body part 12 in a form of being fitted into the large diameter portion of the through-hole of the main body part 12. Therefore, the frame 10 configured to include the main body part 12 and the base part 13 is configured to have therein the accommodating hole 11, which is configured by the through-hole of the main body part 12 and the through-hole of the base part 13 and through which the main shaft 21 can be inserted.

Further, as described above, the table part 22 is attached to the main shaft 21. The main shaft 21 is arranged in the accommodating hole 11 of the frame 10 in a direction in which one end-side of the main shaft is on an opposite side to the base part 13. Further, the rotary body 20 having the main shaft 21 and the table part 22 is rotatably supported in the accommodating hole 11 of the frame 10 by the bearing 2 interposed between the main body part 12 of the frame 10 and the main shaft 21.

The drive mechanism 30 includes a drive motor (not shown) as a drive source for rotationally driving the rotary body 20, and a drive transmission mechanism 31 configured to transmit rotation of an output shaft of the drive motor to the rotary body 20. In addition, the drive transmission mechanism 31 includes a worm wheel 32 attached to the rotary body 20 (main shaft 21) so as not to be relatively rotatable and a worm 33 rotatably supported by the frame 10 in a form of meshing with the worm wheel 32. Further, the drive motor is connected on its output shaft to the worm 33 of the drive transmission mechanism 31. Therefore, in the rotation indexing device 1, drive of the driving motor is controlled according to a preset numerical control program, so that the rotary body 20 is indexed to an angular position set in the numerical control program.

In addition, the holding mechanism 40 is provided so as to hold the rotary body 20 at the angular position during indexing processing so that processing (indexing processing) can be performed at the angular position indexed by the drive mechanism 30. Note that, in the present embodiment, the holding mechanism 40 is a so-called disk type holding mechanism. Specifically, the holding mechanism 40 is configured to sandwich a clamp disk 42, which is attached to the rotary body 20 (main shaft 21) so as not to be relatively rotatable, between a clamp piston 41 and a clamp surface 14 formed on the frame 10, thereby holding the rotary body 20 in a clamping (holding) state via the clamp disk 42.

Further, in the holding mechanism 40, a working fluid is supplied to a space 43 defined by the clamp piston 41 and the frame 10, so that the holding state as described above is realized by a pressure of the working fluid, and the space 43 is formed as a pressure chamber. Therefore, the main body part 12 of the frame 10 is formed with a supply path 15 for supplying the working fluid to the pressure chamber 43.

Further, as for the frame 10 configured to include the base part 13 as described above, the frame 10 includes a cover part 16 attached to the main body part 12 on an opposite side to the base part 13. The cover part 16 is formed in a disk shape and has a through-hole formed to penetrate in a plate thickness direction thereof. The cover part 16 is attached to the main body part 12 in a state where one side (an end face on one side) of both end faces abuts, in arrangement of a center of the through-hole of the cover part coinciding with the center of the accommodating hole 11 of the frame 10 (the through-hole of the main body part 12).

Note that, the through-hole of the cover part 16 is formed as a hole having an inner diameter smaller than the inner diameter of the accommodating hole 11 of the frame 10 (the small diameter portion of the through-hole of the main body part 12). Therefore, the cover part 16 is configured to have a portion (inner peripheral portion) located on a further inner side than an inner peripheral surface of the accommodating hole 11 (the small diameter portion) of the frame 10, in the state (attached state) of being attached to the main body part 12 as described above.

In addition, the cover part 16 has a portion (protruding portion) that protrudes from an end face of the inner peripheral portion on the one side. In the attached state, the cover part 16 is in a state where the protruding portion is fitted to the through-hole (the small diameter portion) of the main body part 12 and protrudes into the through-hole. Note that, in the through-hole of the main body part 12, the bearing 2 is interposed between the main body part 12 and the main shaft 21 as described above, and the protruding portion is adapted to hold (sandwich) the bearing 2 in cooperation with the main body part 12 (more specifically, a surface of the main body part 12 supporting the bearing 2 in the through-hole).

In addition, the through-hole of the cover part 16 naturally has an inner diameter through which the main shaft 21 can be inserted. Since the through-hole has a form of continuing to the main body part 12 in the attached state, the through-hole forms a part of the accommodating hole 11, together with the through-hole of the main body part 12 and the through-hole of the base part 13. Further, the inner diameter of the through-hole of the cover part 16 has such a size that a gap 50 having a predetermined size is formed between the inner peripheral surface of the through-hole and an outer peripheral surface of the main shaft 21 in a state where the main shaft 21 is accommodated in the accommodation hole 11. Since the gap 50 is formed between the cover part 16 and the main shaft 21 and is a portion on the one end-side of the main shaft 21 relative to the bearing 2 in the accommodating hole 11 (a space between the frame 10 and the main shaft 21), the gap corresponds to the void portion referred to in the present invention.

Further, an oil seal 51 is provided in the void portion 50. Note that, the oil seal 51 is provided so as to prevent lubricating oil, which is stored inside the frame 10 so as to lubricate the drive transmission mechanism 31, from flowing out to an outside. Further, in the present embodiment, the oil seal 51 is configured to have a sub-lip portion, in addition to a main lip portion.

The oil seal 51 is more specifically described. As described above, the cover part 16 forming the void portion 50 with the outer peripheral surface of the main shaft 21 is provided with a groove (first groove 16a) opening to the inner peripheral surface of the through-hole thereof and formed over an entire circumference. In other words, the void portion 50 includes a space defined by the first groove 16a formed on the cover part 16. In addition, the first groove 16a is formed to have such a size that a groove width can accommodate the oil seal 51. Further, the oil seal 51 is provided in a form of being fitted in the first groove 16a in the void portion 50. The oil seal 51 is provided in the void portion 50 in this way, so that both lip portions (the main lip portion and the sub-lip portion) are in contact with the outer peripheral surface of the main shaft 21.

In the rotation indexing device 1 configured as described above, the rotation indexing device 1 includes a dust seal 52 provided together with the oil seal 51 in the void portion 50. More specifically, the cover part 16 is provided with a second groove 16b formed to open to the inner peripheral surface of the through-hole of the cover part 16, similar to the first groove 16a provided as described above. That is, the void portion 50 also includes a space defined by the second groove 16b.

However, the second groove 16b is provided on a further end surface on the other side of the cover part 16 (an end surface on an opposite side to the end surface on the one side in contact with the main body part 12) than the first groove 16a in the plate thickness direction. That is, the second groove 16b is provided to the frame 10 in a position on an opposite side to the bearing 2-side with respect to the first groove 16a.

In addition, the second groove 16b is formed to have such a size that a groove width can accommodate the dust seal 52. Further, the second groove 16b is provided in such a form that the dust seal 52 configured so as to mainly prevent introduction of dust (chips, coolant liquid, etc.) is fitted therein. The dust seal 52 is in a state where a lip portion is in contact with the outer peripheral surface of the main shaft 21, in a state of being provided in the void portion 50 in this way. Further, since the second groove 16b is provided with respect to the first groove 16a as described above, the dust seal 52 is in a state of being arranged to be located on the opposite side to the bearing 2-side with respect to the oil seal 51 in the plate thickness direction (an axis direction of the main shaft 21).

Note that, in the rotation indexing device 1, the void portion 50 is configured to communicate with the outside through a gap between the table part 22 and the frame 10 (cover part 16), so that dust is introduced into the void portion 50 via the gap. That is, in the void portion 50, the table part 22-side is a side on which dust is introduced. In the void portion 50, the opposite side to the bearing 2-side with respect to the oil seal 51 is the table part 22-side. Therefore, providing the dust seal 52 as described above means that the dust seal 52 is provided on the introduction side of the dust with respect to the oil seal 51 in the void portion 50.

According to the rotation indexing device 1 configured in this way, even if the dust is introduced into the void portion 50, the dust is prevented from being introduced into the oil seal 51-side by the dust seal 52. As a result, the oil seal 51 is prevented from being damaged due to the dust, so that occurrence of a problem that sealing performance of the oil seal 51 is deteriorated is prevented as much as possible.

In the above, one embodiment (hereinafter, referred to as 'above embodiment') of the rotation indexing device to which the present invention is applied has been described. However, the present invention is not limited to the above embodiment, and can also be implemented by other embodiments (modified embodiments) as described below.
(1) As for the dust seal provided together with the oil seal in the void portion, in the above embodiment, the rotation indexing device 1 is configured to include only one dust seal 52. However, in the present invention, the number of the dust seal provided to the rotation indexing device is not limited to one, and may also be two or more (plural). Note that, in this case, the two or more dust seals are, of course, provided in positions on an opposite side to the bearing 2-side with respect to the oil seal. In addition, the number of the oil seal provided to the rotation indexing device of the preamble of the present invention is not also limited to one as in the above embodiment, and may also be two or more (plural).
(2) As for the void portion in which the dust seal is provided, in the above embodiment, the void portion 50 in which the dust seal 52 is provided is a void formed between the frame 10 and the main shaft 21 of the rotary body 20. However, in the present invention, the void portion may be a void that is formed between the frame and the rotary body and is on the opposite side to the bearing-side with respect to the oil seal, and may also be a void formed between the frame and the table part of the rotary body.

Specifically, first, in the rotation indexing device of the preamble of the present invention, the rotary body of the rotation indexing device has the main shaft rotatably supported in the accommodating hole of the frame and the table part which is provided on one end-side of the main shaft and to which a workpiece or a jig for attaching the workpiece is attached. Note that, as can be understood from FIG. 1 and the like, in the rotary body 20 of the above embodiment, the main shaft 21 and the table part 22 are constituted by members constituting the same, respectively. However, the rotary body of the present invention may have a part corresponding to the main shaft and a part corresponding to the table part, and the configuration (establishment) thereof is not particularly limited. Further, the rotation indexing device 1 of the above embodiment is configured so that the entire table part 22 of the rotary body 20 is located outside the frame 10. However, there is a known rotation indexing device where a part or most of a table part is accommodated inside the frame with respect to the plate thickness direction of the table part (the axis direction of the main shaft).

In the rotation indexing device where the table part of the rotary body is accommodated inside the frame, a void (a void on a table part-side) between the frame and the rotary body exists even on a further table part-side than the main shaft. Therefore, in the case of the rotation indexing device, the void on the table part-side formed between the frame and the table part of the rotary body is included in the void portion referred to in the present invention, and a dust seal may be provided in the void on the table part-side. Note that, in this case, the oil seal may be provided on the further table part-side (a side of the void on the table part-side) than the bearing in the void between the main shaft and the frame, similar to the above embodiment, or may be provided on the further main shaft-side (bearing-side) than the dust seal in the void on the table part-side.

(3) As for the rotation indexing device of the preamble of the present invention, in the above embodiment, the drive mechanism 30 of the rotation indexing device 1 is configured to transmit the rotation of the drive motor to the rotary body 20 via the drive transmission mechanism 31 including the worm wheel 32 and the worm 33, and adopts a so-called worm gear mechanism as the drive transmission mechanism. However, in the present invention, the drive mechanism is not limited to such a configuration.

For example, the drive mechanism may employ, as the drive transmission mechanism, a roller gear cam mechanism including a roller gear where a plurality of rollers is arranged in a circumferential direction and a roller cam shaft having a spiral cam groove in mesh with the roller gear. Alternatively, the drive mechanism may have a configuration where a DD motor (direct drive type drive motor) configured to directly rotationally drive the rotary body without the drive transmission mechanism is used as a drive source.

Further, in the rotation indexing device of the preamble of the present invention, in the above embodiment, the holding mechanism 40 is a so-called disk type holding mechanism. However, the holding mechanism of the present invention is not limited to such a disk type, and other known holding mechanism, for example, a so-called sleeve type holding mechanism configured to hold the rotary body by bending a clamp sleeve provided around the rotary body in a diameter-reducing direction and bringing the same into contact with the rotary body is also possible.

The present invention is not limited to the above embodiment, and can be variously changed without departing from the gist of the present invention.

### REFERENCE SIGNS LIST

- 1:: rotation indexing device

- 2:: bearing
- 10:: frame
- 11:: accommodating hole
- 12:: main body part
- 13:: base part
- 14:: clamp surface
- 15:: supply path
- 16:: cover part
- 16a:: first groove
- 16b:: second groove
- 20:: rotary body
- 21:: main shaft
- 22:: table part
- 30:: drive mechanism
- 31:: drive transmission mechanism
- 32:: worm wheel
- 33:: worm
- 40:: holding mechanism
- 41:: clamp piston
- 42:: clamp disk
- 43:: pressure chamber
- 50:: void portion
- 51:: oil seal
- 52:: dust seal

## Claims

1. A rotation indexing device (1) comprising a rotary body (20) having a main shaft (21) rotatably supported via a bearing (2) in an accommodating hole (11) of a frame (10) and a table part (22) provided on one end-side of the main shaft (21), a workpiece or a jig for attaching the workpiece being attached to the table part (22); an oil seal (51) provided in a void portion (50), which is a portion on the one end-side relative to the bearing (2), in a space between the frame (10) and the rotary body (20); a drive mechanism (30) configured to rotationally drive the rotary body (20); and a holding mechanism (40) for holding the rotary body (20) at an indexed angular position during indexing processing,
**characterized in that**
a dust seal (52) is provided in the void portion (50) on an opposite side to the bearing (2)-side with respect to the oil seal (51).
